# EUROPÄISCHE PATENTSCHRIFT

(11) **EP 1 511 807 B1**
(45) Veröffentlichungstag und Bekanntmachung des Hinweises auf die Patenterteilung: **25.06.2014**
(21) Anmeldenummer: 03755102.5
(22) Anmeldetag: 15.05.2003
(51) Int. Cl.: C08L 55/02, C08L 51/04

(54) **VERFAHREN ZUR HERSTELLUNG VON ABS-ZUSAMMENSETZUNGEN MIT VERBESSERTEN ZÄHIGKEITSEIGENSCHAFTEN**
METHOD FOR PRODUCING ABS COMPOSITIONS HAVING IMPROVED IMPACT STRENGTH PROPERTIES
PROCEDE DE PRODUCTION DE COMPOSITIONS ABS POSSEDANT DES CARACTERISTIQUES DE TENACITE AMELIOREES

(30) Priorität: 28.05.2002 DE 10223646
(43) Veröffentlichungstag der Anmeldung: 09.03.2005
(60) Teilanmeldung: 12190582.2
(73) Patentinhaber: STYROLUTION (JERSEY) LIMITED, Jersey JE4 9WG Channel Islands (GB)
(72) Erfinder: EICHENAUER, Herbert, 41539 Dormagen (DE); MOSS, Stefan, White Plains, NY 10603 (US)
(74) Vertreter: Gille Hrabal
(86) Internationale Anmeldenummer: PCT/EP2003/005104
(87) Internationale Veröffentlichungsnummer: WO 2003/099926

(56) Entgegenhaltungen:
- EP-A- 0 867 463
- WO-A-00/56816
- WO-A-01/74944
- US-B1- 6 380 306

## Beschreibung

Die vorliegende Erfindung betrifft ein Verfahren zur Herstellung von bi-, tri- oder multimodalen ABS-Zusammensetzungen mit verbesserten mechanischen Eigenschaften.

ABS-Zusammensetzungen sind Zweiphasenkunststoffe aus einem thermoplastischen Copolymerisat harzbildender Monomerer z.B. Styrol und Acrylnitril, sowie mindestens einem Pfropfpolymerisat, welches erhältlich ist durch Polymerisation eines oder mehrerer harzbildender Monomerer, z.B. der oben genannten, in Gegenwart eines Kautschuks, z.B. Butadienhomo- oder -copolymerisat als Pfropfgrundlage.

ABS-Zusammensetzungen werden schon seit vielen Jahren in großen Mengen als thermoplastische Harze für die Herstellung von Formteilen aller Art eingesetzt.

Dabei wurde der Begriff ABS-Zusammensetzungen (beziehungsweise Zusammensetzungen vom ABS-Typ) im Laufe der Zeit über Zusammensetzungen, die im Wesentlichen aus Acrylnitril, Butadien und Styrol bestehen, hinaus erweitert und umfasst im Rahmen der vorliegenden Erfindung auch solche Zusammensetzungen, in denen diese Bestandteile ganz oder teilweise durch analoge Bestandteile ersetzt wurden. Beispiele für analoge Bestandteile für Acrylnitril sind z.B. Methacrylnitril, Ethacrylnitril, Methylmethacrylat oder N-Phenylmaleinimid. Beispiele für analoge Bestandteile für Styrol sind z.B. α-Methylstyrol, Chlorstyrol, Vinyltoluol, p-Methylstyrol oder tert.-Butylstyrol. Ein analoger Bestandteil für Butadien ist z.B. Isopren.

Neben der direkten Herstellung von ABS-Zusammensetzungen durch Masse- oder Lösungspolymerisationsverfahren hat die Herstellung von ABS-Zusammensetzungen unter Verwendung durch Emulsionspolymerisation hergestellter Pfropfkautschuke nach wie vor eine große Bedeutung, insbesondere bei der Herstellung hochglänzender Formteile.

Üblicherweise erfolgt die Herstellung solcher als Formmassen geeigneter ABS-Zusammensetzungen durch Compoundierung der Pfropfkautschukpulver mit Styrol/-Acrylnitril-Copolymerharzen oder anderen geeigneten thermoplastischen Harzkomponenten auf Aggregaten wie z.B. Innenknetern oder Extrudern bzw. Schneckenmaschinen.

Die Aufarbeitung des durch Emulsionspolymerisation hergestellten Pfropflatex erfolgt üblicherweise über die Bearbeitungsschritte Fällung, Wäsche, mechanische und/oder thermische Trocknung. Die thermische Trocknung eines Pfropflatex in der festen Phase erfordert allerdings einen hohen Energieaufwand und wird wegen der mit der Trocknung verbundenen Staubexplosionsgefahr in speziell ausgerüsteten Trocknern durchgeführt, was die Wirtschaftlichkeit dieses Verfahrens stark einschränkt.

Neben der häufig angewendeten Kombination aus Pulvertrocknung und anschließender Compoundierung mit dem Thermoplasten werden im Stand der Technik bereits Verfahren zur Schlagzähmodifizierung von Thermoplasten beschrieben, die auf der Einarbeitung von mechanisch nur teilweise entwässerten Kautschuk-Latices direkt in thermoplastische Polymere auf einem Schnecken-Extruder beruhen (siehe z.B. DE 20 37 784). Weiterentwickelte Extruderverfahren werden in den europäischen Offenlegungsschriften EP 0 534 235 A1, EP 0 665 095 A1, EP 0 735 077 A1, EP 0 735 078 A1, EP 0 734 825 A1 und EP 0 734 826 A1 beschrieben.

Ein besonderer Nachteil dieser Verfahren ist die hohe Beanspruchung der Kautschuk/Thermoplastmischung aufgrund der hohen Schergeschwindigkeit von bis zu 1 000 s⁻¹ in Schneckenextrudern. Ein weiterer Nachteil des letztgenannten Verfahrens besteht in dessen mehrstufiger Verfahrensführung, da zunächst Wasser entzogen, dann die Schmelzevermischung und schließlich in einem weiteren Schritt die Restentgasung des Polymeren vorgenommen wird. Da die Energie bei den Schneckenmaschinen im wesentlichen als mechanische Energie über die Schneckenwellen eingetragen wird, ist es darüber hinaus nur begrenzt möglich, den Energieeintrag über Wärmezufuhr zu steuern und eine thermische Belastung der Polymeren zu vermeiden.

Eine neuartige Methode zur Herstellung von ABS-Zusammensetzungen unter Verwendung von Emulsionspfropfkautschuken ist in der EP-A 867 463 beschrieben. Dabei wird die ABS-Zusammensetzung durch Mischen von feuchten Pfropfkautschukpolymeren mit in Schmelzeform vorliegenden Thermoplastharzen (z.B. Styrol/Acrylnitril-Copolymer) unter speziellen Reaktionsbedingungen in einem Knetreaktor erzeugt.

Bei der Herstellung von bi-, tri- oder multimodalen ABS-Zusammensetzungen unter Anwendung des in EP-A 867 463 beschriebenen Verfahrens wurde jedoch festgestellt, dass bei der Herstellung von Bimodalsystemen wie z.B. gemäß Beispiel 1 in EP-A 867 463 ABS-Produkte mit nicht ausreichender Zähigkeit, insbesondere nicht ausreichender Kerbschlagzähigkeit, resultieren.

Die WO 01/74944 beschreibt eine thermoplastische Formmasse, die aus (A) einem ersten gepfropften Kautschuk mit einer gewichtsgemittelten Partikelgröße von 0,05 bis 0,3 Mikrometern, (B) einem zweiten gepfropften Kautschuk mit einer massegemittelten Teilchengröße von 0,31 bis 1,0 Mikrometern, (C) einem Vinylchlorid-(Co)polymer und optional (D) einem Styren-Copolymer besteht.

In der US 6,380,306 werden thermoplastische Formmassen offenbart, die aus A) einem thermoplastischen Polymer, B) einem Propfpolymer mit durchschnittlichem Partikeldurchmesser d50 von 400 bis 600 nm, C) einem zweiten Propfpolymer mit bimodaler Partikelgrößenverteilung (d50 von 25 bis 200 nm und 250 bis 550 nm) und gegebenenfalls D) weiteren Additiven, wie Schmiermitteln, bestehen. Die Erfindung betrifft auch die Verwendung der Formmassen zur Herstellung verschiedener spezieller geformter Gegenstände.

Die EP 0 867 463 beschreibt ein kontinuierliches Verfahren zur Herstellung von schlagzähmodifizierter Thermoplasten. Dazu wird ein Elastomer, insbesondere ein gegebenenfalls teilchenförmiges Propfcopolymer mit einem Knetreaktor in eine Schmelze aus Thermoplast eingearbeitet, wobei das Mischungsverhältnis von Elastomer : Thermoplast zwischen 4 : 1 und 1 : 4 ist.

Es bestand daher die Aufgabe, ein Verfahren zur Herstellung von bi-, tri- oder multimodalen ABS-Zusammensetzungen mit verbesserten mechanischen Eigenschaften, insbesondere verbesserter Kerbschlagzähigkeit unter Verwendung eines Knetreaktors zur Verfügung zu stellen.

Die Aufgabe wird erfindungsgemäß durch ein Verfahren gelöst, bei dem bei der Herstellung der bi-, tri- oder multimodalen ABS-Systeme in einem Knetreaktor spezielle Teilchengrößen und Mengenverhältnisse der zur Synthese der Pfropfkautschukpolymerisate eingesetzten Kautschukpolymerisate sowie spezielle Zusammensetzungen für die Pfropfkautschukpolymerisate eingehalten wurden.

Gegenstand der vorliegenden Erfindung ist ein Verfahren zur Herstellung von thermoplastischen Formmassen vom ABS-Typ enthaltend
A) mindestens einen durch Emulsionspolymerisation von mindestens zwei Monomeren ausgewählt aus Styrol, α-Methylstyrol, Acrylnitril, Methacrylnitril, Methylmethacrylat, N-Phenylmaleinimid in Gegenwart eines oder mehrerer Kautschuklatices erhaltenen Pfropfkautschuk, wobei der mittlere Teilchendurchmesser d₅₀ des Kautschuklatex bzw. der Kautschuklatices ≤ 180 nm beträgt,
B) mindestens einen durch Emulsionspolymerisation von mindestens zwei Monomeren ausgewählt aus Styrol, α-Methylstyrol, Acrylnitril, Methacrylnitril, Methylmethacrylat, N-Phenylmaleinimid in Gegenwart eines oder mehrerer Katuschuklatices erhaltenen Pfropfkautschuk, wobei der mittlere Teilchendurchmesser d₅₀ des Kautschuklatex bzw. der Kautschuklatices ≥ 220 nm beträgt, wobei die Kautschuklatices ausgewählt sind aus Polybutadien. Butadien/Styrol-Copolymerisaten mit bis zu 20 Gew.-% eingebautem Styrol und Butadien/Acrylnitril-Copolymerisaten mit bis zur 15 Gew.-% eingebautem Acrylnitril,
   und
C) mindestens ein kautschukfreies thermoplastisches Polymerharz erhalten durch radikalische Polymerisation von mindestens zwei Monomeren ausgewählt aus Styrol, α-Methylstyrol, Acrylnitril, Methacrylnitril, Methylmethacrylat, N-Phenylmaleinimid,
   unter Verwendung eines Knetreaktors, dadurch gekennzeichnet, dass
   a) die Pfropfkautschukkomponenten A) und B) in separaten Polymerisationsreaktionen hergestellt wurden,
   b) der Anteil in Gew.% des aus der Pfropfkautschukkomponente A) stammenden Kautschuks an der Gesamtmenge an Kautschuk in der Formmasse um mindestens 5 Gew.-% kleiner ist als der Anteil an Kautschuk in Gew.%, der aus der Pfropf-kautschukkomponente B) stammt (jeweils bezogen auf 100 Gew.-Teile Pfropfkautschuk) und
   c) der mittlere Teilchendurchmesser d₅₀ der Gesamtheit aller in der Formmasse enthaltenen Kautschukteilchen einen Wert ≤300 nm aufweist, wobei die mittleren Teilchendurchmesser d₅₀ durch Ultrazentrifugenmessung ermittelt werden.

Ein weiterer Gegenstand der vorliegenden Erfindung sind thermoplastische Formmassen vom ABS-Typ erhältlich durch das erfindungsgemäße Verfahren.

Derartige Produkte sind insbesondere für die wirkungsvolle Schlagzähmodifizierung von Thermoplastharz-Systemen geeignet. Geeignete Thermoplastharz-Systeme sind beispielsweise solche enthaltend Vinylhomopolymerisate wie beispielsweise Polymethylmethacrylat oder Polyvinylchlorid sowie insbesondere solche enthaltend Vinylpolymerisate, die sich von den kautschukfreien thermoplastischen Polymerharzen C) lediglich durch das Molekulargewicht und/oder die chemische Zusammensetzung unterscheiden (z.B. Styrol/Acrylnitril-Copolymerisate mit von C) verschiedenem Molekulargewicht und/oder von C) abweichendem Acrylnitrilgehalt) sowie solche enthaltend ein aromatisches Polycarbonat, Polyestercarbonat, Polyester oder Polyamid.

Ein weiterer Gegenstand der Erfindung sind daher Formmassen enthaltend mindestens eine Formmassen vom ABS-Typ erhältlich nach dem erfindungsgemäßen Verfahren sowie weiterhin mindestens eine weitere Polymerkomponente ausgewählt aus aromatischem Polycarbonat, aromatischem Polyestercarbonat, Polyester oder Polyamid.

Im Allgemeinen können die erfindungsgemäßen Formmassen die Pfropfkautschuke A) und B) und das kautschukfreie thermoplastische Polymerharz C) in beliebigen Mengenanteilen enthalten, solange die oben angegebenen Parameter eingehalten werden.

Üblicherweise sind die Pfropfkautschuke A) und B) im Bereich von 5 bis 95 Gew.-Teilen, vorzugsweise 20 bis 75 Gew.-Teilen und besonders bevorzugt 25 bis 70 Gew.-Teilen und das kautschukfreie thermoplastische Polymerharz C) im Bereich von 95 bis 5 Gew.-Teilen, vorzugsweise 80 bis 25 Gew.-Teilen und besonders bevorzugt 75 bis 30 Gew.-Teilen enthalten.

Als Kautschuke werden üblicherweise Polymerisate mit einer Glasübergangstemperatur ≤0°C eingesetzt.

Beispiele für derartige Polymerisate sind Butadienpolymerisate wie z.B. Polybutadien oder Butadiencopolymerisate mit bis zu 50 Gew.-% (bezogen auf die gesamte zur Butadienpolymerisatherstellung eingesetzte Monomerenmenge) eines oder mehrerer mit Butadien copolymerisierbarer Monomerer (z.B. Isopren, Styrol, Acrylnitril, α-Methylstyrol, C₁-C₄-Alkylstyrole, C₁-C₈-Alkylacrylate, C₁-C₈-Alkylmethacrylate, Alkylenglycoldiacrylate, Alkylenglykoldimethacrylate, Divinylbenzol), Polymere von C₁-C₈-Alkylacrylaten oder C₁-C₈-Alkylmethacrylaten wie z.B. Poly-n-butylacrylat, Poly-2-ethylhexylacrylat, Poydimethylsiloxane.

Bevorzugte Kautschuke sind Polybutadien, Butadien/Styrol-Copolymerisate mit bis zu 20 Gew.-% eingebautem Styrol und Butadien/Acrylnitril-Copolymerisate mit bis zu 15 Gew.-% eingebautem Acrylnitril.

Die Herstellung der erfindungsgemäß einzusetzenden Kautschuke erfolgt üblicherweise durch Emulsionspolymerisation. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben.

Als spezielle Variante kann ebenfalls nach der sogenannten Saatpolymerisationstechnik gearbeitet wurden, bei der zunächst ein feinteiliges Butadienpolymerisat hergestellt und dann durch Weiterumsatz mit Butadien enthaltenden Monomeren zu größeren Teilchen weiterpolymerisiert wird.

Es ist auch möglich, nach bekannten Methoden zunächst ein feinteiliges Kautschukpolymerisat, vorzugsweise ein feinteiliges Butadienpolymerisat, herzustellen und es anschließend in bekannter Weise zur Einstellung der erforderlichen Teilchendurchmesser zu agglomerisieren.

Einschlägige Techniken sind beschrieben (vgl. EP-PS 0 029 613; EP-PS 0 007 810; DD-PS 144 415 DE-AS 12 33 131; DE-AS 12 58 076; DE-OS 21 01 650; US-PS 1 379 391).

Als Emulgatoren können bei der Synthese der Kautschuklatices die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von C₁₀-C₁₈-Fettsäuren, disproportionierte Abietinsäure, hydrierte Abietinsäure, Emulgatoren gemäß DE-A 3 639 904 und DE-A 3 913 509) eingesetzt.

Der zur Herstellung des Pfropfkautschuks A) eingesetzte Kautschuklatex besitzt bei Herstellung der Pfropfkautschuke A) und B) in separaten Polymerisationsreaktionen einen mittleren Teilchendurchmesser d₅₀ <200 nm, vorzugsweise ≤190 nm und besonders bevorzugt ≤180 nm.

Der zur Herstellung des Pfropfkautschuks B) eingesetzte Kautschuklatex besitzt bei Herstellung der Pfropfkautschuke A) und B) in separaten Polymerisationsreaktionen einen mittleren Teilchendurchmesser d₅₀ ≥200 nm, vorzugsweise ≥210 nm und besonders bevorzugt ≥ 220 nm.

Die mittleren Teilchendurchmesser d₅₀ können durch Ultrazentrifugenmessung ermittelt werden (vgl. W. Scholtan, H. Lange:Kolloid Z.u.Z. Polymere 250, S. 782 bis 796 (1972)).

Die Pfropfpolymerisation bei der Herstellung der Pfropfkautschuke A) und B) kann so durchgeführt werden, dass das Monomerengemisch kontinuierlich zum jeweiligen Kautschuklatex gegeben und polymerisiert wird. Dabei werden bevorzugt spezielle Monomer:Kautschuk-Verhältnisse eingehalten und die Monomeren in einer bekannten Weise zum Kautschuklatex gegeben.

Zur Erzeugung der Pfropfkautschukkomponenten A) und B) werden vorzugsweise 25 bis 70 Gew.-Teile, besonders bevorzugt 30 bis 60 Gew.-Teile, einer Mischung von mindestens zwei Monomeren ausgewählt aus Styrol, α-Methylstyrol, Acrylnitril, Methacrylnitril, Methylmethacrylat, N-Phenylmaleinimid in Gegenwart von vorzugsweise 30 bis 75 Gew.-Teilen, besonders bevorzugt 40 bis 70 Gew.-Teilen (jeweils bezogen auf Feststoff) des Kautschuklatex polymerisiert.

Die bei diesen Pfropfpolymerisationsreaktionen eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationsstufe).

Geeignete Molekulargewichtsregler sind beispielsweise Alkylmercaptane wie n-Dodecylmercaptan, t-Dodecylmercaptan; dimeres α-Methylstyrol; Terpinolen.

Als Initiatoren kommen anorganische und organische Peroxide, z.B. H₂O₂, Di-tert.-butylperoxid, Cumolhydroperoxid, Dicyclohexylpercarbonat, tert.-Butylhydroperoxid, p-Menthanhydroperoxid, Azoinitatoren wie Azobisisobutyronitril, anorganische Persalze wie Ammonium-, Natrium-, oder Kaliumpersulfat, Kaliumperphosphat, Natriumperborat sowie Redox-Systeme in Betracht. Redox-Systeme bestehen in der Regel aus einem organischen Oxidationsmittel und einem Reduktionsmittel, wobei im Reaktionsmedium zusätzlich Schwermetallionen vorhanden sein können (siehe Houben-Weyl, Methoden der Organischen Chemie, Band 14/1, S. 263 bis 297).

Die Polymerisationstemperatur ist 25°C bis 160°C, vorzugsweise 40°C bis 90°C. Geeignete Emulgatoren sind die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren. Vorzugsweise werden Emulgatoren mit Carboxylgruppen (z.B. Salze von C₁₀-C₁₈-Fettsäuren, disproportionierte Abietinsäure, hydrierte Abietinsäure, Emulgatoren gemäß DE-A 36 39 904 und DE-A 39 13 509) eingesetzt.

Als kautschukfreie thermoplastische Polymerharze C) werden durch radikalische Polymerisation von mindestens zwei Monomeren ausgewählt aus Styrol, α-Methylstyrol, Acrylnitril, Methacrylnitril, Methylmethacrylat, N-Phenylmaleinimid erhaltene Produkte eingesetzt.

Bevorzugte Polymerharze C) sind Copolymerisate des Styrols und Acrylnitrils im Gewichtsverhältnis 90:10 bis 50:50, besonders bevorzugt im Gewichtsverhältnis 80:20 bis 65:35.

Die Polymerharze C) besitzen vorzugsweise mittlere Molekuargewichte M̅_{w} von 20 000 bis 200 000 bzw. Grenzviskositäten [η] von 20 bis 110 ml/g (gemessen in Dimethylformamid bei 25°C). Solche Harze sind bekannt und lassen sich durch radikalische Polymerisation z.B. in Emulsion, Suspension, Lösung oder Masse herstellen. Einzelheiten zur Herstellung dieser Harze sind beispielsweise in der DE-AS 2 420 358 und der DE-AS 2 724 360 beschrieben. Durch Masse- bzw. Lösungspolymerisation hergestellte Harze haben sich besonders bewährt.

Die Vermischung der Komponenten A), B) und C) erfolgt in einem Knetreaktor wie beispielsweise in EP-A 867 463 beschrieben. Dazu werden die aus der Latexform ausgefällten Pfropfkautschuke A) und B) auf 1 bis 50 Gew.-%, vorzugsweise 5 bis 50 Gew.-%, besonders bevorzugt 10 bis 40 Gew.-% Restfeuchte entwässert und in Form wasserfeuchter Pulver in einem großvolumigen Knetreaktor in die Schmelze des kautschukfreien thermoplastischen Polymerharzes C) eingearbeitet.

Hierbei erfolgt das Verdampfen des den Pfropfpolymeren anhaftenden Prozesswassers, das Schmelzen der Pfropfpolymere, das Legieren der Pfropfpolymere mit der Schmelze des kautschukfreien thermoplastischen Polymerharzes, sowie die Entfernung von flüchtigen organischen Bestandteilen simultan in einem Prozessraum.

Die Entwässerung der ausgefällten Pfropfkautschuke erfolgt vorzugsweise mechanisch, z.B. durch Abpressen oder Zentrifugieren.

Die zum Aufschmelzen, Aufheizen und Ausdampfen der Polymermischung notwendige Energie wird mechanisch über die Knetwirkung der Rotoren und thermisch über die Gehäuseflächen des Knetreaktors eingebracht, wobei das Verhältnis zwischen in die Mischung einzubringender mechanischer und thermischer Energie bevorzugt von 4 : 1 bis 1 : 6, insbesondere bevorzugt von 2,5 : 1 bis 1 : 4 beträgt.

Der Prozess wird bevorzugt in einem großvolumigen teilweise gefüllten Knetreaktor mit rotierenden Einbauten durchgeführt, in dem pro Liter Prozessraum nicht mehr als 5 kg/h Polymer durchgesetzt werden. Die Verweilzeit der Mischung im Prozessraum beträgt typischerweise von 2 bis 20 Minuten.

Geeignet für die Durchführung des erfindungsgemäßen Verfahrens sind Knetreaktoren, die die Mischung zähplastischer Phasen beherrschen, beispielsweise solche die aus den Schriften EP 0 517 068 A1, EP 460 466 B1, EP 0 528 210 A1 oder JP-A-63-232828 bekannt sind. Bevorzugt werden zweiwellige Reaktoren gemäß EP 0 517 068 A1 eingesetzt. Da die mechanische Beanspruchung der Rotoren und die benötigte Antriebsleistung u.U. erheblich höher ist als bei konventionellen Anwendungen dieser Geräteklasse, kann es erforderlich sein, bei marktgängigen Geräten eine Versteifung der Rotoren vorzunehmen und einen erheblich leistungsstärkeren Antrieb im Vergleich zur üblichen Ausstattung auszuwählen.

Die wasserfeuchten Pfropfpolymere werden in einer bevorzugten Ausführungsform mittels einer Stopfschnecke oder einer Kolbenschleuse zugeführt. Außerdem können die Pfropfpolymere über eine Seiher- oder Abpressschnecke unter teilweiser mechanischer Entfernung der Wasserfeuchte zugeführt werden. Weiterhin wird die Schmelze des kautschukfreien thermoplastischen Polymerharzes in der bevorzugten Ausführungsform über die eintrittsseitige Stirnplatte des Knetreaktors zugeführt.

Damit wird verhindert, dass die in der Regel temperaturempfindlichen Pfropfpolymere mit den heißen Gehäuseflächen in Berührung kommen. Die Pfropfpolymere werden vielmehr sofort bei Eintritt in den großvolumigen Knetreaktor in der Schmelze des kautschukfreien thermoplastischen Polymerharzes eingebettet. Außerdem wird die Beeinträchtigung des Mischproduktes durch eventuelle Nebenprodukte aufgrund längerer Eduktverweilzeit am Knetreaktoranfang vermieden.

Der Austrag der entwässerten, entgasten und compoundierten ABS-Zusammensetzung aus dem Knetreaktor erfolgt vorzugsweise über eine Austragschnecke oder Zahnradpumpe an oder nahe der dem Zulauf gegenüberliegenden Stirnplatte. Durch diese Anordnung wird das Reaktorvolumen optimal genutzt. An das Austragsorgan kann eine Schmelzesiebung und Granulierung nach dem Fachmann bekannten Methoden angekoppelt werden.

Die Brüden werden über eine Entgasungsöffnung abgezogen, die bevorzugt nahe dem Produktaustrag angeordnet wird, und dann nach grundsätzlich bekannter Weise kondensiert. Bei einer Anordnung der Entgasungsöffnung näher an der Einspeisestelle wächst die Gefahr, dass durch Pulverflug die Ausbeute vermindert wird. Weiterhin wird in der bevorzugten Ausführungsform die Entgasungsöffnung durch eine Schnecke gereinigt. Damit wird verhindert, dass Schmelze in den Brüdenkanal gelangt und zu Verstopfungen führt.

In der bevorzugten Ausführungsform sind weiterhin alle produktberührenden Oberflächen des Knetreaktors beheizt. Dadurch wird die Energiezufuhr in den Prozessraum maximiert, so dass der Prozess wirtschaftlich optimal betrieben werden kann.

Das Verfahren wird üblicherweise bei einem Innendruck von 1 hPa bis 5 000 hPa, insbesondere von 10 bis 2 000 hPa durchgeführt, bevorzugt jedoch bei Normaldruck, gegebenenfalls auch unter Zugabe von Inertgasen. Die Temperatur der Apparatewandbeheizung beträgt 150 bis 350°C, bevorzugt 180 bis 300°C, besonders bevorzugt 200 bis 270°C. Die spezifische Antriebsleistung für einen Reaktor mit rotierenden Einbauten beträgt von 0,01 bis 1 kWh pro kg trockene Polymerschmelze, bevorzugt von 0,05 bis 0,5 kWh/kg und besonders bevorzugt 0,05 bis 0,25 kWh/kg.

Die erfindungsgemäß hergestellten Formmassen vom ABS-Typ können mit weiteren Polymerkomponenten, vorzugsweise ausgewählt aus aromatischem Polycarbonat, aromatischem Polyestercarbonat, Polyester oder Polyamid, abgemischt werden.

Geeignete thermoplastische Polycarbonate und Polyestercarbonate sind bekannt (vgl. z.B. DE-A 14 95 626, DE-A 22 32 877, DE-A 27 03 376, DE-A 27 14 544, DE-A 30 00 610, DE-A 38 32 396, DE-A 30 77 934) und herstellbar beispielsweise durch Umsetzung von Diphenolen der Formeln (IV) und (V) 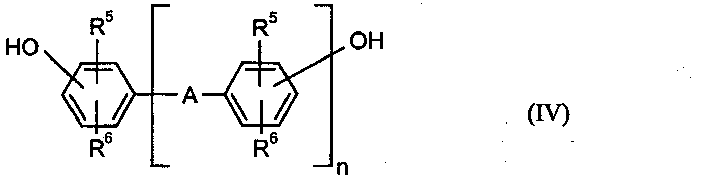 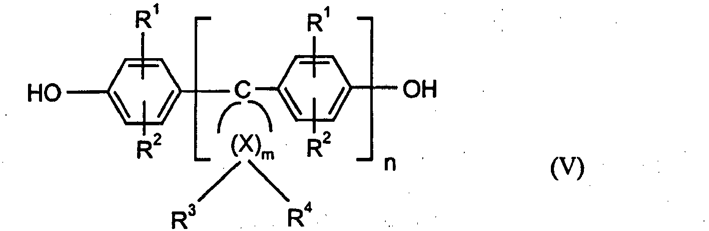 worin
- A: eine Einfachbindung, C₁-C₅-Alkylen, C₂-C₅-Alkyliden, C₅-C₆-Cycloalkyliden, -O-, -S-, -SO-, -SO₂- oder -CO- ist,
- R⁵ und R⁶: unabhängig voneinander für Wasserstoff, Methyl oder Halogen, insbesondere für Wasserstoff, Methyl, Chlor oder Brom stehen,
- R¹ und R²: unabhängig voneinander Wasserstoff, Halogen bevorzugt Chlor oder Brom, C₁-C₈-Alkyl, bevorzugt Methyl, Ethyl, C₅-C₆-Cycloalkyl, bevorzugt Cyclohexyl, C₆-C₁₀-Aryl, bevorzugt Phenyl, oder C₇-C₁₂-Aralkyl, bevorzugt Phenyl-C₁-C₄-alkyl, insbesondere Benzyl, bedeuten,
- m: eine ganze Zahl von 4 bis 7, bevorzugt 4 oder 5 ist,
- n: 0 oder 1 ist,
- R³ und R⁴: für jedes X individuell wählbar sind und unabhängig voneinander Wasserstoff oder C₁-C₆-Alkyl bedeuten und
- X: Kohlenstoff bedeutet,
mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (IV) und (V) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (IV) sind 2,2-Bis-(4-hydroxyphenyl)-propan und 1,1-Bis-(4-hydroxyphenyl)-cyclohexan, bevorzugtes Phenol der Formel (V) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-A 2 842 005, Monoalkylphenole, Dialkylphenole mit insgesamt 8 bis 20 C-Atomen in den Alkylsubstituenten gemäß DE-A 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 mol-%, bezogen auf die Summe der Diphenole (IV) und (V).

Die geeigneten Polycarbonate bzw. Polyestercarbonate können linear oder verzweigt sein; verzweigte Produkte werden vorzugsweise durch den Einbau von 0,05 bis 2,0 mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte (M̅̅̅_{w}, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 mol-% der Dicarbonsäurereste, Terephthalsäurereste und 80 bis 100, vorzugsweise 90 bis 100 mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-A 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-A 1 900 270 und der US-A 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine intrinsische Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus 70 bis 99 mol-% des 4,4'-Diamino-Isomeren, 1 bis 30 mol-% des 2,4'-Diamino-Isomeren und 0 bis 2 mol-% des 2,2'-Diamino-Isomeren sowie gegebenenfalls entsprechend höher kondensierten Diaminen, die durch Hydrierung von Diaminodiphenylmethan technischer Qualität erhalten werden. Die Isophthalsäure kann bis zu 30 Gew.-% durch Terephthalsäure ersetzt sein.

Die Polyamide weisen bevorzugt eine relative Viskosität (gemessen an einer 1 gew.-%igen Lösung in m-Kresol bei 25°C) von 2,0 bis 5,0, besonders bevorzugt von 2,5 bis 4,0 auf.

Ein Vermischen der erfindungsgemäßen Formmassen vom ABS-Typ mit weiteren Polymeren und gegebenenfalls üblichen Additiven erfolgt auf üblichen Mischaggregaten, vorzugsweise auf Mehrwalzenstühlen, Mischextrudern oder Innenknetern.

Die erfindungsgemäßen Formmassen eignen sich zur Herstellung von Formteilen aller Art, so z.B. von Gehäuseteilen, Abdeckungen, Platten usw.

Gegenstand der Erfindung ist weiterhin die Verwendung der erfindungsgemäßen Formmassen zur Herstellung von Formteilen sowie die Formteile selbst.

### Beispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Eingesetzte Komponenten:

### Pfropfkautschuk A1:

Pfropfkautschuklatex erhalten durch radikalische Polymerisation von 50 Gew.-Teilen eines Styrol/Acrylnitril = 73:27-Gemisches in Gegenwart von 50 Gew.-Teilen (Feststoff) eines Polybutadienlatex mit einem mittleren Teilchendurchmesser d₅₀ von 128 nm unter Verwendung von 0,5 Gew.-Teilen K₂S₂O_{8̅} als Initiator.

### Pfropfkautschuk B1:

Pfropfkautschuklatex erhalten durch radikalische Polymerisation von 42 Gew.-Teilen eines Styrol/Acrylnitril = 73:27-Gemisches in Gegenwart von 58 Gew.-Teilen (Feststoff) eines Polybutadienlatex mit einem mittleren Teilchendurchmesser d₅₀ von 352 nm unter Verwendung von 0,5 Gew.-Teilen K₂S₂O₈ als Initiator.

### Pfropfkautschukmischung A2/B2-1

Pfropfkautschuklatex erhalten durch radikalische Polymerisation von 40 Gew.-Teilen eines Styrol/Acrylnitril = 73:27-Gemisches in Gegenwart von 60 Gew.-Teilen (Feststoff) eines Gemisches aus einem Polybutadienlatex mit einem mittleren Teilchendurchmesser d₅₀ von 274 nm (45 %) und einem Polybutadienlatex mit einem mittleren Teilchendurchmesser d₅₀ von 408 nm (55 %), wobei als Initiator ein RedoxSystem aus Natriumascorbat und tert.-Butylhydroperoxid verwendet wurde.

### Pfropfkautschukmischung A2/B2-2

Pfropfkautschuklatex erhalten analog Pfropfkautschukmischung A2/B2-1, jedoch unter Verwendung eines Gemisches aus 55 % eines Polybutadienlatex mit einem mittleren Teilchendurchmesser d₅₀ von 274 nm und 45 % eines Polybutadienlatex mit einem mittleren Teilchendurchmesser d₅₀ von 408 nm.

### Polymerharz C

Statistisches Styrol/Acrylnitril-Copolymerisat (Styrol:Acrylnitril-Gew.-Verhältnis 72:28) mit einem M̅_{w} von ca. 85 000 und M̅_{w}/M̅ₙ-1 ≤2 erhalten durch radikalische Lösungspolymerisation.

### Polycarbonatharz als weitere Polymerharzkomponente

Lineares aromatisches Polycarbonat aus 2,2-Bis-(4-hydroxyphenyl)-propan (Bisphenol A) mit einer relativen Viskosität von 1,26 (gemessen in CH₂Cl₂ bei 25°C in Form einer 0,5 gew.-%igen Lösung), entsprechend einem M̅_{w} von ca. 25 000.

Die Pfropfkautschuklatices A1 und B1 wurden im in Tabelle 1 angegebenen Verhältnis (bezogen auf Feststoff) vermischt bzw. die Pfropfkautschuklatices A2/B2-1 und A2/B2-2 ohne vorherige Vermischung eingesetzt und danach unter Verwendung eines Magnesiumsulfat/Essigsäure = 1:1-Gemisches koaguliert, mit Wasser gewaschen und das feuchte Pulver nach Zentrifugation gemäß Beispiel 1 der EP-A 867 463 in einem Knetreaktor mit der Schmelze des Polymerharzes C vermischt.

Parallel dazu wurden die feuchten Pulver der koagulierten gemischten Pfropfkautschuklatices A1 und B1 sowie des koagulierten Pfropfkautschuklatex A2/B2-1 und des koagulierten Pfropfkautschuklatex A2/B2-1 und des koagulierten Pfropfkautschuklatex A2/B2-1 in einem Umlufttrockenschrank bei 70°C getrocknet.

Sowohl die nach Vermischen im Knetreaktor resultierenden Produkte aus A1, B1 und C als auch die im Umlufttrockenschrank getrockneten Pulver A1 und B 1 wurden mit weiterem Styrol/Acrylnitril-Copolymer (Polymerharz C) in einem Innenkneter zu Produkten mit einem Kautschukgehalt von jeweils 16 Gew.-% compoundiert, wobei 2 Gew.-Teile Ethylendiaminbisstearylamid und 0,1 Gew.-Teile eines Silikonöls als Additive (bezogen jeweils auf 100 Gew.-Teile Polymer) zugesetzt wurden.

Aus den resultierenden Compounds wurden bei 240°C Prüfkörper gespritzt, an denen die Kerbschlagzähigkeit bei Raumtemperatur (aₖ^{RT}) und bei -40°C (aₖ^{-40°C}) nach ISO 180/1A (Einheit:kJ/m²) ermittelt wurde.

Weiterhin wurden sowohl die nach Vermischen im Knetreaktor resultierenden Produkte aus A2/B2-1 und C bzw. aus A2/B2-2 und C als auch die im Umlufttrockenschrank getrockneten Pulver A2/B2-1 und A2/B2-2 mit weiterem Styrol/Acrylnitril-Copolymer (Polymerharz C) und dem oben beschriebenem Polycarbonatharz in einem Innenkneter jeweils zu Produkten mit einem Pfropfkautschukgehalt von 24 Gew.-%, einem Gehalt an Styrol/Acrylnitril-Copolymer C von 33 Gew.-% und einem Gehalt an Polycarbonatharz von 43 Gew.-% compoundiert, wobei jeweils 0,75 Gew.-Teile Pentaerythrittetrastearat als Additiv (bezogen auf 100 Gew.-Teile Polymer) zugesetzt wurde.

Aus den resultierenden Compounds wurden bei 260°C Prüfkörper gespritzt, an denen die Kerbschlagzähigkeit bei -20°C (aₖ-^{20°C}) nach ISO 180/1A (Einheit: kJ/m²) ermittelt wurde.

Aus den ebenfalls in Tabelle 1 angegebenen Zähigkeitswerten ist ersichtlich, dass die im Knetreaktor hergestellten Produkte nur bei Einhaltung der erfindungsgemäßen Parameter mit den unter Verwendung von Pfropfkautschukpulver hergestellten Produkten vergleichbare Zähigkeitseigenschaften aufweisen.

Bei Nichteinhalten der erfindungsgemäßen Parameter wird jedoch ein deutlicher Abfall der Kerbschlagzähigkeit der im Knetreaktor hergestellten Produkte beobachtet.

**Tabelle 1: Eingesetzte Pfropfkautschuke und Eigenschaften der geprüften Formmassen**

| Beispiel | A1 | B1 | ΔKautschuk B/A [%] | Aufarbeitung über Knetreaktor (Schmelze) | | Aufarbeitung über Pfropfkautschukpulver | |
|---|---|---|---|---|---|---|---|
| | (Gew.-Teile) | (Gew.-Teile) | (bezogen auf 100 Gew.-Teile Pfropfkautschuk) | aₖ^{RT} (kJ/m²) | aₖ^{-40°C} (kJ/m²) | aₖ^{RT} (kJ/m²) | aₖ^{-40°C} (kJ/m²) |
| 1 | 40 | 60 | 14,8 | 17,5 | 9,6 | 17,6 | 9,5 |
| 2 | 45 | 55 | 9,4 | 16,8 | 9,1 | 17,0 | 9,2 |
| 3 (Vergleich) | 50 | 50 | 4,0 | 14,2 | 7,4 | 16,5 | 8,7 |
| 4 (Vergleich) | 55 | 45 | -1,4 | 13,0 | 6,9 | 15,6 | 8,2 |
| 5 (Vergleich) | 60 | 40 | -6,8 | 11,6 | 6,5 | 15,1 | 8,1 |

| Beispiel | A2/B2-1 | A2/B2-2 | ΔKautshuk B/A [%] | Aufarbeitung über Knetreaktor (Schmelze) | | Aufarbeitung über Pfropfkautschukpulver | |
|---|---|---|---|---|---|---|---|
| | (Gew.-Teile) | (Gew.-Teile) | (bezogen auf 100 Gew.-Teile Pfropfkautschuk) | aₖ^{-20°C} (kJ/m²) | | aₖ^{-20°C} (kJ/m²) | |
| 6 * | 100 | - | 10 | | 83 | | 86 |
| 7 (Vergleich) | - | 100 | -10 | | 44 | | 78 |

| | | | | | | | |
|---|---|---|---|---|---|---|---|
| * = keine erfindungsgemäße Ausführungsform | | | | | | | |

## Patentansprüche

1. Verfahren zur Herstellung von thermoplastischen Formmassen vom ABS-Typ enthaltend
A) mindestens einen durch Emulsionspolymerisation von mindestens zwei Monomeren ausgewählt aus Styrol, α-Methylstyrol, Acrylnitril, Methacrylnitril, Methylmethacrylat, N-Phenylmaleinimid in Gegenwart eines oder mehrerer Kautschuklatices erhaltenen Pfropfkautschuk, wobei der mittlere Teilchendurchmesser d₅₀ des Kautschuklatex bzw. der Kautschuklatices ≤ 180 nm beträgt,
B) mindestens einen durch Emulsionspolymerisation von mindestens zwei Monomeren ausgewählt aus Styrol, α-Methylstyrol, Acrylnitril, Methacrylnitril, Methylmethacrylat, N-Phenylmaleinimid in Gegenwart eines oder mehrerer Katuschuklatices erhaltenen Pfropfkautschuk, wobei der mittlere Teilchendurchmesser d₅₀ des Kautschuk latex bzw. der Kautschuklatices ≥220 nm beträgt,
wobei die Kautschuklatices ausgewählt sind aus Polybutadien, Butadien/Styrol-Copolymerisaten mit bis zu 20 Gew.-% eingebautem Styrol und Butadien/Acrylnitril-Copolymerisaten mit bis zu 15 Gew.-% eingebautem Acrylnitril und
C) mindestens ein kautschukfreies thermoplastisches Polymerharz erhalten durch radikalische Polymerisation von mindestens zwei Monomeren ausgewählt aus Styrol, α-Methylstyrol, Acrylnitril, Methacrylnitril, Methylmethacrylat, N-Phenylmaleinimid,
unter Verwendung eines Knetreaktors, **dadurch gekennzeichnet, dass**
a) die Pfropfkautschukkomponenten A) und B) in separaten Poly merisationsreaktionen hergestellt wurden,
b) der Anteil in Gew.-% des aus der Pfropfkautschukkomponente A) stammenden Kautschuks an der Gesamtmenge an Kautschuk in der Formmasse um mindestens 5 Gew.-% kleiner ist als der Anteil an Kautschuk in Gew.-%, der aus der Pfropfkautschukkomponente B) stammt (jeweils bezogen auf 100 Gew.-Teile Pfropfkautschuk) und
c) der mittlere Teilchen4urchmesser d₅₀ der Gesamtheit aller in der Formmasse enthaltenen Kautschukteilchen einen Wert ≤300 nm aufweist, wobei die mittleren Teilchendurchmesser d₅₀ durch Ultrazentrifugenmessung ermittelt werden.

2. Verfahren nach Anspruch 1, wobei der Anteil in Gew.-% des aus der Pfropfkautschukkomponente A) stammenden Kautschuks an der Gesamtmenge an Kautschuk in der Formmasse um mindestens 7,5 Gew.-% kleiner ist als der Anteil an Kautschuk in Gew.-%, der aus der Pfropfkautschukkomponents B) stammt (jeweils bezogen auf 100 Gew.-Teile Pfropfkautschuk).

3. Verfahren nach Anspruch 1, wobei der mittlere Teilchendurchmesser d₅₀ der Gesamtheit aller in der Formmasse enthaltenen Kautschukteilchen einen Wert ≤280 nm aufweist.

4. Formmassen erhältlich nach dem Verfahren gemäß Anspruch 1.

5. Formmassen gemäß Anspruch 4 enthaltend weiterhin mindestens eine weitere Polymerkomponente ausgewählt aus aromatischem Polycarbonat, aromatischen Polyestercarbonat, Polyester, Polyamid oder Vinylhomo- oder copolymerisat.

6. Verwendung von Formmassen nach Anspruch 4 oder 5 zur Herstellung von Formteilen.

7. Formteile erhältlich aus Formmassen nach Anspruch 4 oder 5.

## Claims

1. A method for producing molding compositions of the ABC type containing
A) at least one graft rubber obtained by emulsion polymerization of two monomers selected from styrene, α-methylstyrene, acrylonitrile, methacrylonitrile, methyl methacrylate, N-phenylmaleimide, in the presence of one or more rubber latices, wherein the average particle diameter d₅₀ of the rubber latex or the rubber latices, respectively, is 280 nm.
B) at least one graft rubber obtained by emulsion polymerization of two monomers selected from styrene, α-methyl styrene, acrylonitrile, methacrylonitrile, methyl methacrylate, N-phenylmaleimide, in the presence of one or more rubber latices, wherein the average particle diameter d₅₀ of the rubber latex or the rubber latices, respectively, is 220 nm,
wherein the rubber latices are selected from polybutadiene, butadiene/styrene copolymers having incorporated therein up to 20 % by weight of styrene and butadiene/acrylonitrile copolymers,
and
C) at least one thermoplastic polymer resin devoid of rubber obtained by radical polymerization of at least two monomers selected from styrene, α-methyl styrene, acrylonitrile, methacrylonitrile, methyl methacrylate, N-phenylmaleimide
by using a mixing reactor, **characterized in that**
a) the graft rubber components A) and B) were produced in separate polymerization reactions,
b) the percentage by weight of rubber derived from the graft rubber component A of the total amount of the rubber in the molding composition is at least by 5 % by weight lower than the percentage of rubber derived from the rubber component B) (each referred to 100 parts by weight of graft rubber) and
c) the average particle diameter of the entirety of all rubber particles contained in the molding composition has a value of ≤ 100 nm, the average particle diameters d₅₀ being determined by ultracentrifuge measurement.

2. The method according to claim 1, wherein the percentage by weight of rubber derived from rubber component A) of the total amount of the rubber in the molding composition is at least by 7,5 % by weight lower than the percentage of rubber derived from rubber component B) (each referred to 100 parts by weight of graft rubber).

3. The method according to claim 1, wherein the average particle diameter d₅₀ of the entirety of all rubber particles contained in the molding composition has a value of ≤ 280 nm.

4. Molding compositions obtainable by the method according to claim 1.

5. The molding compositions according to claim 4, furthermore containing at least one additional polymer component selected from aromatic polycarbonate, aromatic polyester carbonate, polyester, polyamide or vinyl homopolymer or copolymer.

6. Use of molding compositions according to claim 4 or 5 for producing molded articles.

7. Molded articles obtainable from molding compositions according to claim 4 or 5.

## Revendications

1. Procédé de production de compositions de moulage du type ABC contentant
A) au moins un caoutchouc greffé obtenu par la polymérisation en émulsion de deux monomères sélectionnés parmi le styrène, le α-méthylstyrène, l'acrylonitrile, le méthacrylonitrile, le méthacrylate de méthyl, le N-phenylmaleimide, en présence de un ou plusieurs latices de caoutchouc, dans lequel le diamètre moyen de particule d₅₀ du latex de caoutchouc ou des latices de caoutchouc, respectivement, est 280 nm.
B) au moins un caoutchouc greffé obtenu par polymérisation en émulsion de deux monomères sélectionnés parmi le styrène, le α-méthyl styrène, l'acrylonitrile, le méthacrylonitrile, le méthacrylate de méthyl, le N-phenylmaleimide, en présence d'un ou plusieurs latices de caoutchouc, dans lequel le diamètre moyen de particule d₅₀ du latex de caoutchouc ou des latices de caoutchouc, respectivement, est 220 nm,
dans lequel les latices de caoutchouc sont sélectionnés parmi le polybutadiène, les copolymères de butadiène/styrène ayant incorporés là-dedans jusqu'à 20 % en poids de styrène et les copolymères de butadiène/acrylonitrile,
et
C) au moins une résine polymère thermoplastique dépourvue de caoutchouc obtenue par polymérisation radicalaire d'au moins deux monomères sélectionnés parmi le styrène, le α-méthyl styrène, l'acrylonitrile, le méthacrylonitrile, le méthacrylate de méthyl, le N-phenylmaleimide
en utilisant un réacteur de malaxage, **caractérisé par le fait que**
a) le composants A) et B) de caoutchouc greffé étaient produits dans des réactions de polymérisation séparées,
b) le pourcentage pondéral du caoutchouc dérivé du composant de caoutchouc greffé de la quantité totale du caoutchouc dans la composition de moulage est au moins de 5 % en poids inférieur au pourcentage du caoutchouc dérivé du composant de caoutchouc B) (chacun basé sur 100 parts en poids du caoutchouc greffé) et
c) le diamètre moyen de particule de l'ensemble de toutes les particules de caoutchouc contenues dans le composition de moulage a une valeur de ≤ 100 nm, les diamètres moyens de particule d₅₀ étant déterminés par mesure par l'ultracentrifugeuse.

2. Procédé selon la revendication 1, dans lequel le pourcentage pondéral du caoutchouc dérivé du composant de caoutchouc A) de la quantité totale du caoutchouc dans la composition de moulage est au moins de 7,5 % en poids inférieur au pourcentage pondéral du caoutchouc dérivé du composant de caoutchouc B) (chacun basé sur 100 parts en poids du caoutchouc greffé).

3. Procédé selon la revendication 1, dans lequel le diamètre moyen de particule d₅₀ de l'ensemble de toutes les particules de caoutchouc contenues dans la composition de moulage a une valeur de ≤ 280 nm.

4. Compositions de moulages qui peuvent être obtenir par la méthode selon la revendication 1.

5. Compositions de moulages selon la revendication 4, comprenant en outre au moins un composant de polymère additionnel sélectionné parmi le polycarbonate aromatique, le polyester carbonate aromatique, le polyester, le polyamide ou le homopolymère ou copolymère de vinyle.

6. Utilisation de compositions de moulages selon la revendication 4 ou 5 pour la production des pièces moulés.

7. Pièce moulé qui peut être obtenir à partir de compositions de moulages selon la revendication 4 ou 5.
